# DEMANDE DE BREVET EUROPEEN

(11) **EP 1 369 171 A1**
(43) Date de publication de la demande: **10.12.2003**
(21) Numéro de dépôt: 03291274.3
(22) Date de dépôt: 28.05.2003
(51) Int. Cl.: B01J 8/00, B01J 8/10, G01G 13/02

(54) **Dispositif d'introduction de réactif solide**

(30) Priorité: 03.06.2002 FR 0206782
(71) Demandeur: Aventis Pharma S.A., 92160 Antony (FR)
(72) Inventeur: Borgne, Michel, 01600 Trévoux (FR)
(74) Mandataire: Rousseau, Pierrick Edouard

(57) **Abrégé**

Appareil permettant d'introduire un réactif en poudre (2) dans un réacteur (7) sous atmosphère contrôlée et de réguler son introduction en fonction du temps et d'en obtenir une traçabilité. L'appareil est constitué de deux vis sans fins (1) fonctionnant simultanément, la première déversant le réactif solide (2) dans le réacteur (7) et la seconde déversant le réactif solide (2) sur une balance (6).

## Description

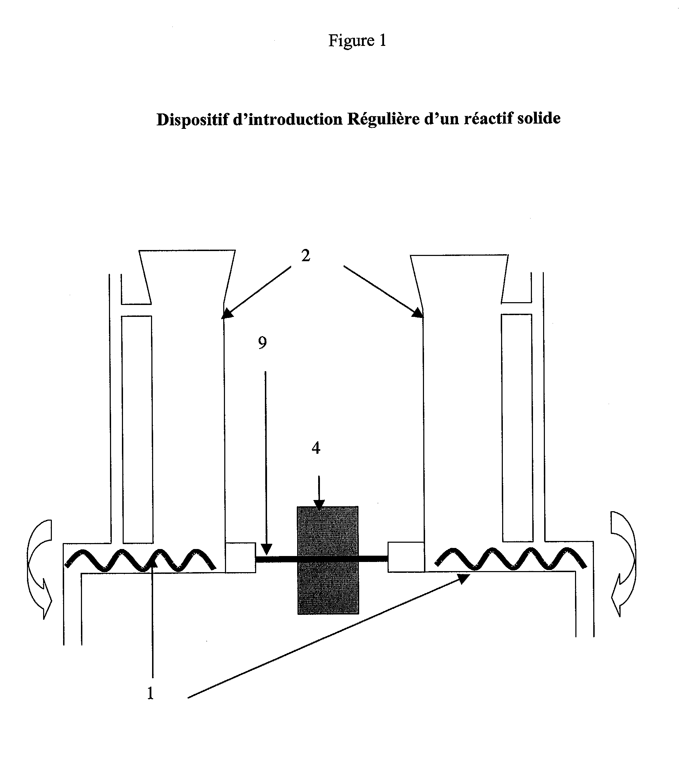

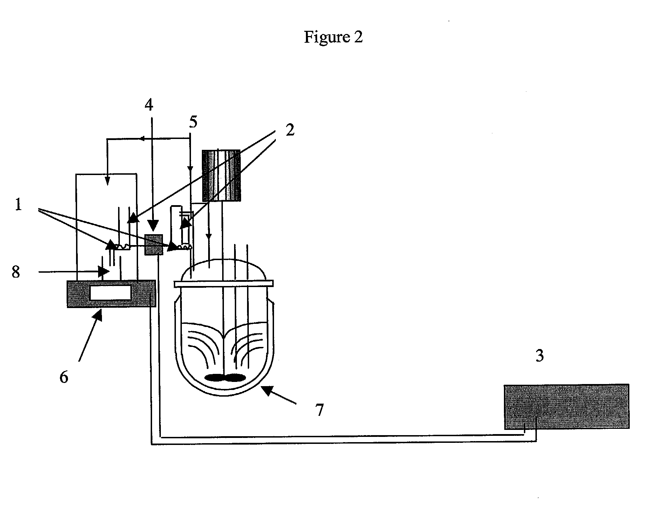

La présente invention concerne un système d'introduction de solides dans un réacteur chimique permettant un contrôle des quantités introduites et surtout de connaître la quantité exacte introduite en fonction du temps et de contrôler au mieux la réaction chimique. De plus ce système permet d'avoir une traçabilité de l'introduction du réactif par un enregistrement de la masse de poudre réellement introduite. Cet appareil d'introduction de réactifs solides dans un réacteur permet donc d'avoir une introduction du solide régulée et reproductible en fonction du temps. Cette introduction peut être réalisée sous atmosphère contrôlée.
Les systèmes connus consistent généralement à introduire de manière manuelle régulièrement le réactif dans le réacteur ce qui n'est pas reproductible. Il est difficile dans ces conditions de maintenir une étanchéité du réacteur et la manipulation de produits dangereux devient très délicate. Des systèmes d'introduction de poudre sont également connus. L'utilisation d'un erlenmeyer en position horizontale entraîné par un moteur sur un réacteur ouvert. Ce système ne permet pas de faire la manipulation sous atmosphère contrôlée et d'avoir un enregistrement de la masse de poudre introduite en fonction du temps. Ce système a été décrit au forum d'utilisateur RC1 en 1992, San Antonio : « computer controlled Solids Addition ». Il existe également un système commercial utilisant une boucle d'introduction contrôlée par un moteur de type RC1 comprenant une vis hélicoïdale. Ce système a été décrit au forum d'utilisateur RC1 en 1991, Davos « controlled Solids Addition to RC1 experiment ». Ce système ne permet d'enregistrer la masse de poudre introduite en fonction du temps.
Il existe également des systèmes de bras articulés.
Les inconvénients de ces systèmes sont de deux ordres, la difficulté d'avoir une précision sur la quantité introduite en fonction du temps, et de maintenir l'étanchéité du système. En effet pour optimiser une réaction avant de la réaliser à une échelle plus grande il est important de maîtriser tous les paramètres et d'en vérifier leur influence. Pour cela leur reproductibilité est nécessaire. De plus, certaines réactions sont fortement exothermiques et l'introduction des réactifs doit être maîtrisée pour avoir une sécurité maximum.
La présente invention permet de résoudre les inconvénients susmentionnés par la réalisation d'un système totalement symétrique caractérisé en ce que une première vis sans fin introduit le réactif dans le réacteur et une seconde vis identique à la première mais positionné en sens inverse à la première introduit simultanément la même quantité de réactif sur une balance. La balance enregistre ainsi ce qui est introduit dans le réacteur d'une manière indirecte. Ceci permet de savoir ce qui est introduit, à quelle vitesse et ainsi de connaître l'impact de l'introduction de la poudre sur la réaction. De plus, le système peut être réalisé de manière à ce que le réactif soit introduit et stocké sous une atmosphère contrôlée. De système permet donc d'introduire une masse de réactif sous atmosphère isolée de l'extérieure d'une manière linéaire en fonction du temps ou en fonction d'un gradient d'introduction. Ce système permettra également de programmer l'introduction du réactif solide. Ce système permet également d'introduire ce réactif à tout moment dans un milieu qu'il soit sous vide, sous pression, à ébullition ou sous atmosphère gazeuse réactive.
Cet appareil d'introduction de réactifs solides dans un réacteur régulée et reproductible en fonction du temps est caractérisé en ce que il est constitué de deux vis sans fin fonctionnant simultanément de manières identiques, la première déversant le réactif solide dans le réacteur et la seconde déversant le réactif solide sur une balance. Cet appareil peut être utilisé sous atmosphère contrôlée.
Cet appareil est caractérisé en ce que la balance enregistre en fonction du temps la quantité de réactif versée.
Cet appareil est utilisé pour l'optimisation de réaction chimique.
Cet appareil est un appareil périphérique de réacteur calorimétrique et peut être entièrement piloté par tout système de régulation tout en conservant les fonctionnalités existantes du dispositif.
La présente invention est illustrée de manière non limitative avec l'exemple de réalisation suivant. L'appareil est décrit avec les figures 1 et 2. La figure 1 représente l'appareil de manière isolée et la figure 2 l'appareil qui est monté sur le réacteur pour son utilisation.
L'appareil est constitué de deux vis en téflon® (1) dont l'une à un pas inversée par rapport à l'autre, d'un axe de rotation (9) entre les deux vis en acier inox®, d'un moteur (4) d'agitation de type IKA 50-2000tr/min par exemple, de réservoirs de poudre en verre (2) résistant au vide et à la pression et ayant des extrémités rodés.
La légende des figures 1 et 2 est explicitée ci dessous
1 Deux vis en téflon® à pas inversés
2 Deux réservoirs en verre pour le solide
3 Boucle de régulation moteur pour introduction de la poudre
4 Moteur
5 Arrivée du gaz
6 Balance
7 Réacteur
8 Récipient receveur sur la balance
9 Axe de rotation

## Revendications

1. Appareil d'introduction de réactifs solides dans un réacteur régulée et reproductible en fonction du temps est **caractérisé en ce que** il est constitué de deux vis sans fin fonctionnant simultanément de manières identiques, la première déversant le réactif solide dans le réacteur et la seconde déversant le réactif solide sur une balance.

2. Appareil d'introduction de réactifs solides sous atmosphère contrôlée dans un réacteur régulée et reproductible en fonction du temps est **caractérisé en ce que** il est constitué de deux vis sans fin fonctionnant simultanément de manières identiques, la première déversant le réactif solide dans le réacteur et la seconde déversant le réactif solide sur une balance.

3. Appareil selon la revendication 1 ou 2 est **caractérisé en ce que** la balance enregistre en fonction du temps la quantité de réactif versée.

4. Utilisation de l'appareil selon la revendication 3 pour l'optimisation de réaction chimique.
